# DEMANDE DE BREVET EUROPEEN

(11) **EP 2 234 078 A1**
(43) Date de publication de la demande: **29.09.2010**
(21) Numéro de dépôt: 10153565.6
(22) Date de dépôt: 15.02.2010
(51) Int. Cl.: G08B 13/14

(54) **Antivol pour module photovoltaïque**

(30) Priorité: 27.03.2009 FR 0901490
(71) Demandeur: Photowatt International S.A., 38300 Bourgoin-Jallieu (FR); Tecknisolar Seni, 92400 Courbevoie (FR)
(72) Inventeur: Aurousseau, Valery, 38110, ST CLAIR DE LA TOUR (FR); Allandrieu, Frantz, 01800, SAINT MAURICE DE GOURDANS (FR); Barguirdjian, Pascal, 35400, SAINT MALO (FR)
(74) Mandataire: Maureau, Philippe

(57) **Abrégé**

La présente invention a pour objet un module solaire photovoltaïque (1) comportant au moins une cellule photovoltaïque et des bornes de raccordement (2) à un réseau électrique, **caractérisé en ce qu**'il comporte en plus des moyens de désactivation (5) du module (1) agencés pour établir une dérivation aux bornes de raccordement (2) du module (1) et mettre le module (1) hors service, un corps mobile (6) dans une cavité (4) de logement selon au moins un degré de liberté entre une première position dans laquelle le corps (6) n'interagit pas avec les moyens de désactivation et une seconde position dans laquelle le corps (6) interagit avec les moyens de désactivation (5) de façon à établir une dérivation aux bornes de raccordement (2) du module (1), et un moyen de blocage (7) du corps (6) dans la seconde position.

## Description

La présente invention concerne le domaine de la protection antivol de module photovoltaïque et plus particulièrement un module photovoltaïque équipé d'un dispositif de mise hors service destiné à dissuader des vols.

Le vol de modules photovoltaïques, aussi appelés modules solaires est un délit qu'il est nécessaire de freiner au plus vite car il constitue un frein à leur développement économique. En effet, ce type de module est bien souvent installé sur un support au sol ou à des endroits facilement accessibles et/ou isolés. Ainsi, il devient aisé de dérober un module photovoltaïque, il suffit juste de le déconnecter du réseau auquel il est branché et de le sortir de son support.

Il existe à ce jour, différents systèmes d'alarmes électroniques et mécaniques rapportés sur un module solaire permettant de connaître en temps réel le vol et la dégradation d'un module solaire sur site isolé.

On peut citer à ce sujet le document DE 20 2007 008512 U1 qui propose des dispositifs de fixation destinés à recevoir des capteurs d'alarme en vue de signaler toute tentative de retrait des modules photovoltaïques de leur support.

L'un de ces dispositifs est intégré dans le module solaire, n'est pas visible à l'oeil nu et est dotée d'un système d'alarme électronique ou mécanique qui se déclenche ou qui coupe la production électrique du module solaire lors d'un dévissage manuel d'une vis qui agit sur un aimant avec contact à lame souple.

Un autre de ces dispositifs consiste en la neutralisation de la fonction de production d'électricité par l'intermédiaire d'un traitement numérique piloté par de l'électronique, ce dispositif étant onéreux et complexe à mettre en oeuvre.

Cependant, ces systèmes proposés sont jusqu'à présent facilement contournables par une intervention manuelle ou électrique tel que shuntage, extraction, dévissage ou transformation.

Ces dispositifs n'ont donc qu'une fonction de dissuasion qui n'empêche pas pour autant que le module photovoltaïque soit remonté de façon opérationnelle ailleurs que sur son support d'origine, ce qui ne décourage pas les actes répréhensibles. De plus ces moyens de sécurité rajoutés au module solaire augmentent le coût des panneaux solaires.

Ce type de dissuasion n'est donc efficace que si les modules photovoltaïques se trouvent sous constante surveillance et que les temps de réaction et autres délais d'intervention auprès de ces modules après déclenchement des alarmes sont courts.

La présente invention a pour objectif de proposer une solution à ces inconvénients.

A cet effet, la présente invention a pour objet un module solaire photovoltaïque comportant au moins une cellule photovoltaïque et des bornes de raccordement à un réseau électrique, **caractérisé en ce qu**'il comporte en plus des moyens de désactivation du module agencés pour établir une dérivation aux bornes de raccordement du module et mettre le module hors service, un corps mobile dans une cavité de logement selon au moins un degré de liberté entre une première position dans laquelle le corps n'interagit pas avec les moyens de désactivation et une seconde position dans laquelle le corps interagit avec les moyens de désactivation de façon à établir une dérivation aux bornes de raccordement du module, et un moyen de blocage du corps dans la seconde position.

Cette disposition permet de neutraliser la production d'électricité fournie par un module solaire de jour lors d'une manipulation et d'un démontage non autorisés de jour comme de nuit sur un site isolé.

Le passage à la seconde position du corps est bloquant, le moyen de blocage dans la seconde position ne permet pas de faire basculer le module vers un état opérationnel, ce qui rend le module inutilisable et prévient d'autant plus les vols.

Ainsi, l'ensemble constitué par la cavité, par les moyens de désactivation, par le corps mobile et par le moyen de blocage constituent un dispositif de mise hors service destiné à dissuader des vols.

Selon un mode de réalisation, la cavité est comprise dans des couches laminées du module solaire.

Cette disposition permet de dissimuler la cavité et ainsi d'en interdire l'accès. La cavité, de faible encombrement, est idéalement incrusté sur le même support du circuit électrique des cellules solaires et/ou noyé dans une même résine que celles-ci de sorte qu'un arrachage de la cavité génère l'endommagement irréversible du laminé photovoltaïque et des cellules solaires prouvant que le panneau a été volé et vendalisé.

Selon un autre mode de réalisation, les moyens de désactivation comprennent deux languettes conductrices.

Ces languettes conductrices permettent de réduire l'encombrement des moyens de désactivation tout en contribuant à un abaissement de son coût.

Selon un mode de réalisation, le corps présente des propriétés magnétiques.

Les propriétés magnétiques du corps permettent de contribuer à son maintien dans la seconde position.

Selon le même mode de réalisation, le corps magnétique est une bille.

La forme en bille permet au corps de se déplacer en roulant à l'intérieur de la cavité selon le sens de la pesanteur qui s'exerce sur lui et de l'orientation du module.

Avantageusement, le moyen de blocage du corps dans la seconde position est un aimant.

L'aimant combiné aux propriétés magnétiques du corps permet de maintenir celui-ci dans la seconde position quelque soit l'orientation du module.

Selon un mode de réalisation, le moyen de blocage du corps contribue à ramener le corps dans la seconde position.

Cette disposition augmente la sensibilité de déclenchement de l'interaction entre le corps et le moyen de désactivation et donc la mise hors service du module. Il ne suffit donc pas pour maintenir le module opérationnel de transporter le module selon une même orientation, ce qui en soit est déjà très difficile à réaliser. Il peut également être envisagé un support de module qui entrainerait obligatoirement une désorientation du module lors de son extraction de ce même support.

Selon un mode de réalisation, des moyens pour brider dans la première position le corps mobile sont agencés dans la cavité.

Ces moyens permettent d'empêcher le corps d'atteindre la seconde position lors du transport du module vers son lieu d'installation ainsi que lors de sa mise en place.

Selon le même mode de réalisation, les moyens pour brider dans la première position le corps mobile comprennent une languette traversant la cavité.

Cette languette permet une mise en oeuvre facile et peut couteuse d'un moyen retenant le corps dans sa première position de bridage pour le transport et installation.

Avantageusement, le déplacement des moyens pour brider le corps dans la première position est irréversible.

Cette disposition ne permet pas de neutraliser le déplacement du corps par un simple repositionnement des moyens de bridage du corps dans sa première position sans endommagement ou vandalisation du passage de l'insert de bridage.

De toute façon, l'invention sera bien comprise à l'aide de la description qui suit, en référence aux dessins schématiques annexés, représentant à titre d'exemple non limitatif, un mode de réalisation d'un module solaire selon l'invention.
La figure 1 est une vue d'ensemble schématique d'un module selon l'invention comprenant un dispositif de mise hors service.
La figure 2 est un schéma en coupe du dispositif de mise hors service avant la mise en service du module.
La figure 3 est un schéma en coupe du dispositif de mise hors service lorsque le module est en service.
La figure 4 est un schéma en coupe du dispositif de mise hors service lorsque celui-ci a été enclenché.

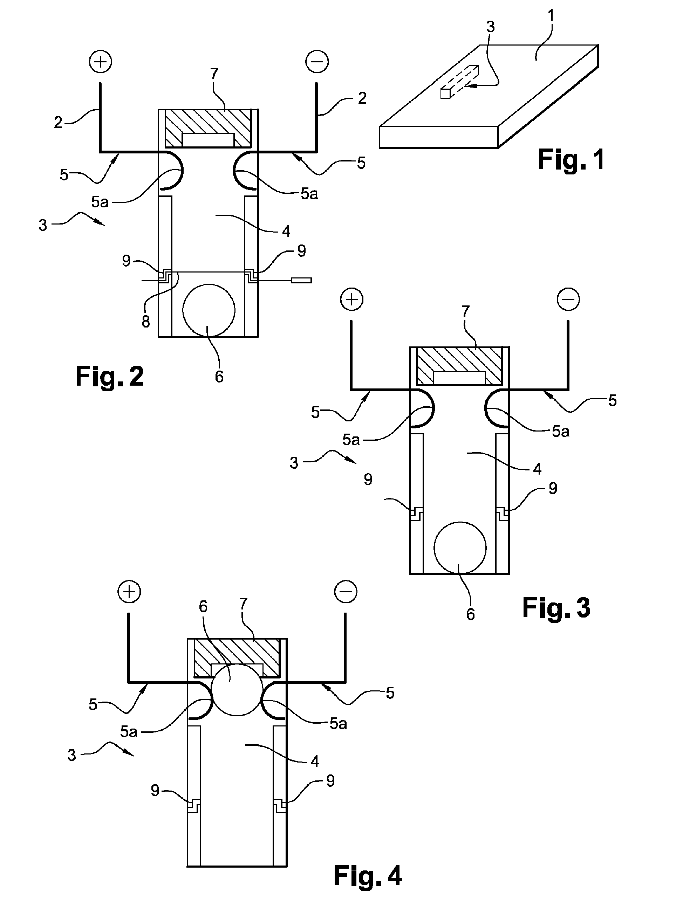

Selon le mode de réalisation représenté aux figures 1 à 4, un module photovoltaïque 1 comprend des moyens de raccordement au réseau électrique 2 comportant deux bornes de sortie : une borne plus et une borne moins distinctes, et une cavité 4 agencée dans l'épaisseur des laminés du module photovoltaïque 1 afin de la rendre non visible.

Selon des variantes, la cavité peut être ménagée dans toute autre partie du module empêchant un accès direct au dispositif sans vandalisme.

La cavité 4 a une forme cylindrique. Des moyens de désactivation électrique 5 représenté par deux languettes 5 issues chacune de l'une des bornes de sortie plus et moins du module 1 font saillies transversalement à l'intérieur de la cavité cylindrique selon une position prédéterminée.

Ces languettes 5 sont disposées symétriquement en opposition l'une de l'autre à l'intérieur de la cavité cylindrique 4. Leurs extrémités 5a en saillie à l'intérieur de la cavité cylindrique 4 sont courbées afin de conférer à leur profil une forme de demi-cercle. Cette forme en demi-cercle leur confère une élasticité selon leur rayon de courbure.

Une bille conductrice, notamment en acier 6, est disposée à l'intérieur de la cavité cylindrique 4. L'acier possède de bonnes propriétés électriques et magnétiques et est peu coûteux, ce qui en fait un bon matériau pour la mise en oeuvre du dispositif.

Une languette plastique de bridage 8 est disposée transversalement à travers des passages coudés 9 agencés de part et d'autre de la paroi de la cavité cylindrique 4 de manière à empêcher la bille d'acier 6 de se déplacer librement à l'intérieur de la cavité 4 durant le transport ou bien l'installation du module sur son support ou châssis (non représentés).

Enfin, un aimant 7 est disposé dans la cavité cylindrique 4 du côté opposé à la bille d'acier 6 par rapport aux languettes conductrices 5. La bille d'acier 6 et l'aimant 7 se trouvent donc placés au repos sur les deux bases du cylindre formé par la cavité 4.

L'ensemble composé de la cavité 4, les languettes conductrices 5, de la bille d'acier 6, de l'aimant 7, de la languette de bridage 8 et de ses coudes de passage 9 forment le dispositif 3.

Lors de la première installation du module photovoltaïque 1, l'installateur va placer le module solaire sur un châssis, une chape de béton, un toit d'habitation, etc. Puis l'installateur détermine l'orientation correcte du module photovoltaïque 1 par rapport au soleil. Cette orientation varie selon la technologie employée pour la production d'électricité et de la région. Suivant ces paramètres il devra incliner le module 1 selon un angle allant de 10° à 80° au sud/sud-ouest afin de recevoir un maximum d'ensoleillement mais il peut également l'orienter à l'est, au nord et/ou le mettre légèrement à plat, c'est-à-dire fixé à l'horizontal.

Le dispositif 3 sur le module solaire 1 est positionné de façon horizontal et/ou vertical afin d'éviter de couper la production d'électricité du module solaire 1 suite à des vibrations provoqués par la résonnance du moteur ou du passage d'un véhicule ou d'un bateau en marche.

Cette orientation doit permettre à la bille d'acier 6 de rester positionné selon la première position sans qu'elle ne vienne au contact de la languette plastique de bridage 8, sans quoi le module serait immédiatement mis hors service par le dispositif 3 lors du dégagement de la languette plastique de bridage 8. Il est à noter que le dispositif 3 peut être fixé indifféremment sur l'arrière, l'avant ou même sur le côté du module photovoltaïque 1.

Une fois correctement orienté et fixé sur son support, l'installateur dégage ensuite la languette plastique de bridage 8 en s'aidant de l'anneau 8a disposé sur l'une de ses extrémités.

Les passages coudés 9 empêchent l'installateur de réengager la languette plastique de bridage 8. Ces passages coudés 9 ont donc pour fonction de retenir solidement la languette 8 durant le transport et l'installation et d'empêcher la réintroduction d'une languette 8 lorsque le module 1 est mis en service.

Dans cette configuration, le dispositif 3 se trouve opérationnel et le module photovoltaïque 1 se trouve en service, c'est-à-dire qu'il produira de l'électricité lorsqu'il verra la lumière du jour. Le module photovoltaïque 1 est alors protégé par le dispositif 3.

Lors d'une tentative de vol ou autre acte illicite qui engendre un déplacement du module 1, l'orientation et/ou l'inclinaison du module 1 et donc du dispositif 3 se voient modifiées.

La bille d'acier 6 se trouve alors mise en mouvement dans la cavité cylindrique 4 sous l'action de la pesanteur conjointement à l'orientation du module 1. Cette mise en mouvement entrainera irrémédiablement la bille d'acier 6 à se déplacer dans le champ d'attraction de l'aimant 7 qui va l'attirer conjointement à la pesanteur vers la seconde position.

La bille d'acier 6 va alors entrer en contact avec les deux languettes conductrices 5, ce qui aura pour effet de mettre au même potentiel les deux languettes conductrices 5 et donc de court-circuiter les bornes de raccordement au réseau 2, ce qui entrainera l'arrêt de la production en électricité du module photovoltaïque 1.

Sous l'action de l'aimant 7, la bille d'acier 6 va également s'engager entre les deux extrémités élastiques 5a des deux languettes conductrices 5 en les repoussant latéralement vers les parois de la cavité cylindrique 4 jusqu'elle atteigne l'aimant 7.

La bille d'acier 6 se trouve alors selon sa seconde position et y est retenu par l'action de l'aimant 7.

Dans cette configuration, le dispositif 3 est activé et le module photovoltaïques 1 est mis hors service.

L'invention permet également de désactiver le dispositif 3. En effet, si le module solaire volé et par conséquent hors service est retrouvé par le propriétaire, un dispositif mobile portable permet de remettre le module photovoltaïque 1 en service, c'est-à-dire de repositionner la bille d'acier 6 dans sa première position, et cela sans démontage, sans manipulation électrique extérieure et sans transformation.

Ce dispositif mobile soumet à la bille d'acier 6, un flux magnétique opposé permettant de remettre automatiquement la bille conductrice 6 selon sa première position par un simple passage à effleurement sur le module photovoltaïque à l'endroit où est positionné le dispositif 3.

Une manipulation au voisinage du dispositif 3 d'un aimant quelconque non définit ne peut pas remettre en service le dispositif.

Une partie de la face avant du module photovoltaïque 1 peut être dotée d'une mention indiquant qu'il est protégé par vibration et oscillation mécanique contre un déplacement ou enlèvement non autorisé.

L'invention permet de protéger un module photovoltaïque 1 à un faible coût et d'en dissuader le vol avec une technologie mécanique et automatique par mouvement.

Le dispositif 3 encapsulé dans le module photovoltaïque 1 aura la même durée de vie que le module photovoltaïque 1 et ne nécessitera pas d'entretien.

Pour remettre le panneau solaire en état de production d'énergie, il est impératif d'accéder au dispositif 3 pour le neutraliser. Cet acte de vandalisme fournira la preuve matérielle d'une transformation du module photovoltaïque 1 suite à un vol ou un déplacement.

Comme il va de soi, l'invention ne se limite pas à la forme de réalisation préférentielle décrite ci-dessus, à titre d'exemple non-limitatif ; elle en embrasse au contraire toutes les variantes. En particulier, les languettes plastiques de bridage 8 peuvent être remplacées par une tige, une clavette, une clef ou tout autre système pouvant réaliser la même fonction de bridage.

## Revendications

1. Module solaire photovoltaïque (1) comportant :
au moins une cellule photovoltaïque et des bornes de raccordement (2) à un réseau électrique,
**caractérisé en ce qu'**il comporte en plus :
- des moyens de désactivation (5) du module (1) agencés pour établir une dérivation aux bornes de raccordement (2) du module (1) et mettre le module (1) hors service,
- un corps mobile (6) dans une cavité (4) de logement selon au moins un degré de liberté entre une première position dans laquelle le corps (6) n'interagit pas avec les moyens de désactivation et une seconde position dans laquelle le corps (6) interagit avec les moyens de désactivation (5) de façon à établir une dérivation aux bornes de raccordement (2) du module (1), et
- un moyen de blocage (7) du corps (6) dans la seconde position.

2. Module solaire photovoltaïque (1) selon la revendication 1 dans lequel la cavité (4) est comprise dans des couches laminées du module solaire (1) ou tout autre emplacement nécessitant une destruction partielle du module solaire.

3. Module solaire photovoltaïque (1) selon l'une des revendications précédentes dans lequel les moyens de désactivation (5) comprennent deux languettes conductrices (5).

4. Module solaire photovoltaïque (1) selon l'une des revendications précédentes dans lequel le corps (6) présente des propriétés magnétiques.

5. Module solaire photovoltaïque (1) selon la revendication 4 dans lequel le corps (6) magnétique est une bille (6).

6. Module solaire photovoltaïque (1) selon l'une des revendications 4 ou 5 dans lequel le moyen de blocage (7) du corps (6) dans la seconde position est un aimant (7).

7. Module solaire photovoltaïque (1) selon l'une des revendications précédentes dans lequel le moyen de blocage (7) du corps (6) contribue à ramener le corps (6) dans la seconde position.

8. Module solaire photovoltaïque (1) selon l'une des revendications précédentes dans lequel des moyens (8) pour brider dans la première position le corps mobile (6) sont agencés dans la cavité (4).

9. Module solaire photovoltaïque (1) selon la revendication 8 dans lequel les moyens (8) pour brider dans la première position le corps mobile (6) comprennent une languette (8) traversant la cavité (4).

10. Module solaire photovoltaïque (1) selon l'une des revendications 8 ou 9 dans lequel le déplacement des moyens (8) pour brider le corps (6) dans la première position est irréversible.
